# EUROPÄISCHE PATENTANMELDUNG

(11) **EP 2 187 147 A1**
(43) Veröffentlichungstag der Anmeldung: **19.05.2010**
(21) Anmeldenummer: 08019932.6
(22) Anmeldetag: 14.11.2008
(51) Int. Cl.: F24J 2/52, H01L 31/042, E04D 12/00, H01L 31/048

(54) **Dachaufbau mit einer Anordnung von Solarpanelen**

(71) Anmelder: Energiebüro AG, 8005 Zürich (CH)
(72) Erfinder: Meier, Christian, 8004 Zürich (CH)
(74) Vertreter: Sutter, Kurt

(57) **Zusammenfassung**

Bei einem Dachaufbau mit einer Anordnung von Solarpanelen sind zwischen nebeneinander liegenden Solarpanelen (1a, 1b) jeweils horizontal verlaufende Befestigungsprofile (2) angeordnet. Jedes Befestigungsprofil (2) erstreckt sich unter den Rahmen (3) des jeweils oberen Solarmoduls (1a) und über den Rahmen (3) des jeweils unteren Solarmoduls (1b), und sowohl das obere als auch das untere Solarmodul (1a, 1b) sind am Befestigungsprofil (2) befestigt. Auf diese Weise wird eine ziegeldichte Verlegung durch die Befestigungsprofile (2) sichergestellt, und gleichzeitig dienen die Befestigungsprofile (2) der Montage der Solarpanele (1a, 1b).

## Beschreibung

Die Erfindung bezieht sich auf einen Dachaufbau mit einer Anordnung von Solarpanelen.

Unter dem Begriff "Solarpanele" sind dabei plattenartige Bauteile zu verstehen, welche in der Lage sind, Sonnenstrahlung in andere nutzbare Energieformen, insbesondere Elektrizität oder Wärme, umzuwandeln. Insbesondere handelt es sich hierbei um photovoltaische Solarmodule (d.h. Anordnungen von photoelektrischen Solarzellen) und solarthermische Kollektoren (d.h. Anordnungen, welche die Sonnenstrahlung in Wärme umwandeln und ein umgepumptes, flüssiges oder gasförmiges Medium eines Wärmekreislaufs aufheizen).

Gattungsgemässe Anordnungen dienen dazu, Solarpanele in definierter Position fest auf einem Gebäude zu verankern.

Vorzugsweise sollte eine solche Anordnung weitere Funktionen am Gebäude erfüllen, beispielsweise sollte sie ziegeldicht verlegt sein und so die Rolle konventioneller Ziegel übernehmen können. Unter "ziegeldichter Verlegung" ist eine Anordnung aus Bauteilen zu verstehen, bei welcher abfliessendes Wasser unter dem unteren Ende eines ersten Bauteils gefasst und am oberen Ende des darunter liegenden Bauteils auf dieses Geleitet wird, das Wasser fliesst also wie bei einem Ziegeldach über die Bauteile ab.

Vorrichtungen dieser Art sind z.B. aus US 4 336 413 und DE 33 37 658 bekannt. Die Konstruktion gemäss US 4 336 524 weist jedoch den Nachteil auf, dass die Module in einem speziell aufgebauten Rahmen gefasst sein müssen, was die Konstruktion gegenüber in normalen Metallrahmen gefassten Modulen verteuert. In der Lösung gemäss DE 33 37 658 überlappen sich die Solarmodule andererseits so weit, dass es bei schräger Sonneneinstrahlung zu einer Abschattung der unteren Solarmodule durch die jeweils oberen kommen kann.

Vor diesem Hintergrund stellt sich die Aufgabe, eine Anordnung der eingangs genannten Art bereitzustellen, welche mit handelsüblichen Solarpanelen, insbesondere Solarmodulen, mit metallischem Rahmen auskommt und dennoch eine Verlegung der Module ohne Gefahr einer Abschattung erlaubt.

Diese Aufgabe wird vom Dachaufbau gemäss Anspruch 1 gelöst. Demgemäss ist zwischen in First-Traufen-Richtung (d.h. in Fallrichtung des Dachs) nebeneinander liegenden Solarpanele jeweils ein Befestigungsprofil angeordnet. Dabei erstreckt sich das Befestigungsprofil unter den Rahmen des jeweils oberen Solarpanels und über den Rahmen des jeweils unteren Solarpanels, und sowohl das obere als auch das untere Solarpanel sind am Befestigungsprofil befestigt. Auf diese Weise wird also die ziegeldichte Verlegung durch die Befestigungsprofile sichergestellt, indem das Wasser vom unteren Ende des jeweils oberen Solarpanels auf das Befestigungsprofil und von dort auf die Oberseite des jeweils unteren Solarpanels fliesst, und gleichzeitig dienen die Befestigungsprofile der Montage der Solarpanele.

Vorzugsweise ist an der Unterseite des Rahmens an der unteren Kante des jeweils oberen Solarpanels mindestens ein Anker angeschraubt, der in das Befestigungsprofil eingehängt ist. Dies erlaubt es, die an normalen Modulrahmen vorgesehenen rückseitigen Befestigungslöcher zu nutzen, wobei dennoch eine Montage der mit den Ankern versehenen Module "von vorne", d.h. ohne Notwendigkeit eines Zugriffs von der Dachunterseite, möglich ist.

An seinem firstseitigen Ende wird das jeweils untere Solarpanel vorzugsweise von mindestens einer Haltevorrichtung umgriffen, welche mindestens teilweise vom Befestigungsprofil gebildet wird. Dies vereinfacht die Montage, indem das Solarpanel in einfacher Weise von der traufenseitigen Richtung her in diese Haltevorrichtung eingeschoben werden kann.

Der Aufbau kann direkt auf dem Dach oder Unterdach befestigt werden. Hierzu kann am Befestigungsprofil ein Fuss zur Befestigung an diesem Dach bzw.- Unterdach angeordnet werden.

Weitere bevorzugte Ausführungen ergeben sich aus den abhängigen Ansprüchen sowie aus der nun folgenden Beschreibung anhand der Figuren. Dabei zeigen:
Fig. 1 eine Anordnung mehrerer Solarmodule und
Fig. 2 einen Schnitt durch die Enden zweier benachbarter Solarmodule mit dazwischen liegendem Befestigungsprofil.

Bevor ein Ausführungsbeispiel genauer beschrieben wird, werden zur Vereinfachung der Notation die folgenden Begriffe definiert:

Unter "firstseitig" wird die dem Dachfirst zugewandte Richtung verstanden, d.h. es handelt sich um die Richtung entlang der Falllinie des Dachs nach oben.

Unter "traufenseitig" wird die der Traufe des Dachs zugewandte Richtung verstanden, d.h. es handelt sich um die Richtung entlang der Falllinie des Dachs nach unten.

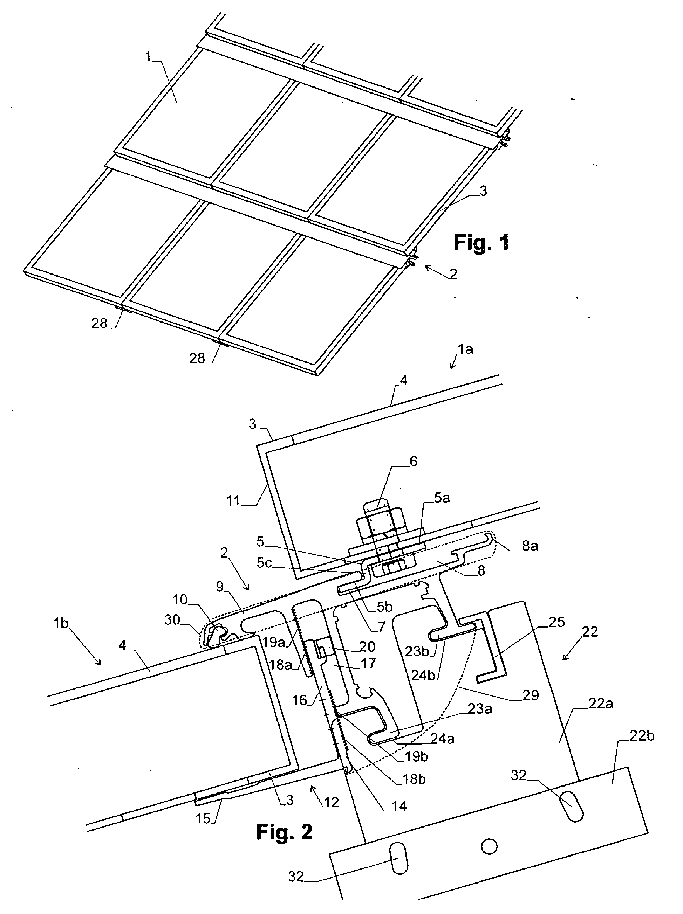

Die in Fig. 1 dargestellte Anordnung umfasst mehrere Solarmodule 1 mit Befestigungsprofilen 2. Der Aufbau der Module und des Befestigungsprofils ist in Detail aus Fig. 2 ersichtlich.

Jedes Solarmodul 1 besitzt einen sich um das Modul herum erstreckenden Rahmen 3 aus einem Metallprofil, der eine Frontplatte 4 aus transparentem Material hält. Im Innern des Moduls sind in bekannter Weise photovoltaische Zellen angeordnet (nicht gezeigt). Die Solarmodule sind kommerziell erhältliche Modelle, die nicht speziell auf die erfindungsgemässe Montage angepasst zu sein brauchen.

Wie aus Fig. 1 ersichtlich, umfasst die Anordnung mehrere Solarmodule 1, welche in horizontalen Reihen und entlang der Falllinie des Daches in Spalten angeordnet sind. Zwischen den horizontalen Reihen verlaufen in horizontaler Richtung die Befestigungsprofile 2, so dass in Frist-Traufen-Richtung nebeneinander liegende Solarmodule jeweils über ein Befestigungsprofil 2 verbunden sind.

Beim Befestigungsprofil 2 handelt es sich vorzugsweise um ein Profilelement aus Metall, dessen Querschnitt über seine ganze Länge unverändert bleibt. Es besitzt eine Länge wesentlich grösser als die Breite der Solarmodule, so dass es sich über mehrere horizontal benachbarte Solarmodule erstreckt.

Wie aus Fig. 1 ersichtlich, überlappen sich die in Fallrichtung des Dachs nebeneinander liegenden Solarmodule 1 nicht, so dass ein Schattenwurf bei schräger Sonneneinstrahlung weitgehend vermieden werden kann. Der dabei entstehende Spalt zwischen den Solarmodulen wird vom Befestigungsprofil 2 abgedeckt.

Die Ausgestaltung des Befestigungsprofils ist aus Fig. 2 ersichtlich, die das Profil zwischen einem oberen, firstseitigen Modul 1a und einem unteren, traufenseitigen Modul 1b zeigt.

In einem firstseitigen Bereich erstreckt sich das Befestigungsprofil unter das obere Solarmodul 1a und ist von unten an dessen Rahmen 3 befestigt. Die Oberseite des oberen Solarmoduls 1a wird vom Befestigungsprofil 2 nicht überdeckt und liegt frei, so dass Wasser gut ablaufen kann.

Zur Befestigung des Befestigungsprofils 2 am oberen Solarmodul 1a ist ein Anker vorgesehen, der von einem Stufenprofil 5 gebildet wird. Das Stufenprofil 5 besitzt einen oberen flachen Abschnitt 5a und einen unteren flachen Abschnitt 5b, die über eine Stufe 5c verbunden sind. Der obere Abschnitt 5a ist mit einer Schraube 6 (oder z.B. Niete) am Rahmen 3 des oberen Solarmoduls 1a befestigt. Diese Befestigungsweise hat den Vorteil, dass die in normalen Solarmodulen im Rahmen vorgesehenen Befestigungslöcher zur Befestigung der Module verwendet werden können, so dass eine mit den Montagevorschriften der Module konforme Befestigung erreicht werden kann.

Das untere Ende des Ankers bzw. Stufenprofils 5 greift in eine Nut 7 des Befestigungsprofils 2 ein und hält das untere Ende des oberen Solarmoduls 1a auf diese weise gegen Zug in Normalrichtung zum Dach fest.

In horizontaler Richtung sind die Anker 5 wesentlich kürzer als die Breite der Solarmodule 1 und besitzen eine Länge von z.B. 10 cm. Pro Solarmodul 1 sind in der Regel zwei separate Anker 5 vorgesehen, grundsätzlich denkbar ist jedoch auch die Verwendung nur eines Ankers 5. Andererseits erstreckt sich die Nut 7 über die ganze Länge des Befestigungsprofils 2, so dass keine besondere seitliche Ausrichtung der Solarmodulen 1 auf die Lattung des Dachs erforderlich ist und die Solarmodule beliebig entlang des Befestigungsprofils 2 platziert werden können.

Die Nut 7 verläuft horizontal und ist firstseitig offen, so dass die Solarmodule in der weiter unten beschriebenen Art und Weise montiert werden können. Sie mündet in eine Vertiefung 8 auf der Oberseite des Befestigurigsprofils 2, welche Platz für den Kopf der Schraube 6 und zum Einschieben des Ankers 5 in die Nut 7 schafft, gleichzeitig aber mit einer firstseitigen Erhöhung 8a ein Überfliessen von Wasser verhindert.

Ein traufenseitiger Arm 9 des Befestigungsprofils 2 liegt von oben über ein elastisches Andruckelement 10 auf dem unteren Solarmodul 1b auf. Der Arm 9 dient dazu, über die firstseitige Kante 11 des oberen Solarmoduls 1a abfliessendes Wasser auf die Oberseite des unteren Solarmoduls 1 abzuleiten.

Das firstseitige Ende des unteren Solarmoduls 1b wird von einer Haltevorrichtung 12 umgriffen. Im vorliegenden Beispiel ist die Haltevorrichtung 12 zweiteilig ausgeführt, so dass sie an die (nicht normierte) Dicke der Solarmodule angepasst werden kann. Sie besteht einerseits aus dem bereits erwähnten Arm 9 des Befestigungsprofils sowie dem Andruckelement 10, und andererseits aus einem Auflageprofil 14. Das Auflageprofil 14 besitzt einen ungefähr parallel zur Dachfläche verlaufenden, unteren Schenkel 15, der das untere Solarmodul 1b von unten stützt. Es wird vom Befestigungsprofil 2 gehalten.

Die Länge des Auflageprofils 14 in horizontaler Richtung ist vorzugsweise wesentlich kürzer als die Breite der Solarmodule. Pro Solarmodul sind in der Regel mindestens zwei Auflageprofile 14 vorgesehen, grundsätzlich denkbar ist jedoch auch die Verwendung eines einzigen Auflageprofils 14.

Dieses Auflageprofil 14 kann auch so montiert werden, dass beispielsweise der traufseitige Anschluss an herkömmliche Dacheindeckungsmaterialien sichergestellt ist. Somit kann die Anordnung in ein herkömmliches Dachsystem integriert werden.

Damit die Haltevorrichtung 12 unterschiedlich dicken Solarmodulen angepasst werden kann, kann jedes Auflageprofil in mehreren unterschiedlichen Höhen bzw. Positionen am Befestigungsprofil 2 befestigt werden. Hierzu weist das Auflageprofil 14 einen Schaft 16 auf, der in eine nach unten offene Ausnehmung 17 im Befestigungsprofil 2 eingreift und über mindestens eine, vorzugsweise zwei, gezahnte Oberflächen 18a bzw. 18b mit entsprechend gezahnten Oberflächen 19a, 19b des Befestigungsprofils 2 verbunden ist.

In der vorliegenden Ausführung befindet sich eine erste gezahnte Oberfläche 18a des Auflageprofils 14 traufenseitig am oberen Ende des Schafts 16 und greift in eine erste, firstseitige, gezahnte Oberfläche 19a des Befestigungsprofils 2 ein. Auf der der ersten gezahnten Oberfläche 18a gegenüber liegenden Seite ist zwischen dem Schaft 16 und dem Befestigungsprofil 2 ein elastisches Spannelement 20 angeordnet, welches die beiden ersten gezahnten Oberflächen 18a, 19a aufeinander drückt und so die Halterung verbessert.

Weiter ist in der gezeigten Ausführung auch firstseitig am Schaft 16 eine zweite gezahnte Oberfläche 18b vorgesehen, welche in eine entsprechende zweite gezahnte Oberfläche 19b des Befestigungsprofils 2 eingreift.

Am Befestigungsprofil 2 ist weiter ein Fuss in Form eines Blechs 22 (oder auch z.B. eines gezogenen Aluprofils) angeordnet, welches seinerseits am Dach oder Unterdach, z.B. an der Konterlattung, befestigt ist. Hierzu besitzt das Befestigungsprofil 2 zwei Nasen 23a, 23b, welche in entsprechende Ausnehmungen 24a, 24b des Fusses eingreifen. Zudem ist ein seitlich einschiebbarer-Sicherungsbügel 25 vorgesehen, welcher das Befestigungsprofil im Fuss sichert.

Die Montage der Anordnung ist einfach und umfasst die folgenden Schritte:

Zuerst werden die Befestigungsschienen 2 über die Füsse bzw. Bleche 22 am Unterdach bzw. Dach befestigt. Dann werden in geeigneten Abständen (z.B. in Abständen entsprechend der Breite der Solarmodule 1) die Auflageprofile 14 an den Befestigungsschienen 2 befestigt, und zwar jeweils in einer solchen vertikalen Position, dass der Abstand zwischen dem Schenkel 15 und der Unterseite des Arms 9 ungefähr der Dicke der Solarmodule 1 entspricht.

Weiter werden an den Solarmodulen die Anker 5 befestigt.

Nun kann jedes Solarmodul montiert werden, indem zuerst seine obere Kante in eine der Halterungen 12 eingeschoben wird, wo diese durch die elastische Wirkung des Andruckelements 10 spielfrei Halt findet. Sodann wird die untere Kante des Solarmoduls so weit nach unten geschwenkt, dass der untere Abschnitt 5b in die Vertiefung 8 des Befestigungsprofils 2 zu liegen kommt. Danach kann der untere Abschnitt 5b mit einer leichten Gleitbewegung des Solarmoduls entlang der Falllinie des Dachs in die Nut 7 eingeführt werden, wodurch das Solarmodul gesichert wird.

Um ein Abfliessen von Wasser durch die in Fallrichtung verlaufenden Fugen zwischen zwei benachbarten Solarmodulen zu verhindern, können unterhalb dieser Fugen vertikal verlaufende Profilrinnen 28 angeordnet werden, wie in Fig. 1 angedeutet.

Zusätzlich können endseitig an den Befestigungsprofilen Dichtplatten, z.B. aus Kunststoff, angebracht werden, die ein seitliches Ablaufen von Wasser aus der Vertiefung 8 verhindern. Der Umriss einer derartigen Dichtplatte ist in Fig. 2 mit einer gestrichelten Linie 30 eingezeichnet.

Um ein Herausfallen des Auflageprofils 14 vor Montage des Solarmoduls 1 zu verhindern, kann dieses, wie in Fig. 2 mit gestrichelten Linen angedeutet, mit einem elastischen Halteglied 29, z.B. eine Bandfeder, Blattfeder oder Spiralfeder, gegen das Befestigungsprofil 2 gezogen sein. Vorzugsweise greift das Halteglied 29 am unteren Schenkel 15 an und übt auf diesen eine im wesentlichen firstseitig gerichtete Kraft aus.

Die beschriebene Anordnung eignet sich zur Montage an Schrägdächern und auch auf gewölbten Dächern. Bei der Montage auf gewölbten Dächern kann der Winkel zwischen dem Schaft 16 und dem Schenkel 15 des Auflageprofils der jeweiligen Wölbung angepasst werden oder der oberen Seite des Schenkels 15 kann durch Einlegen schräg angeordneter Platten oder Keilelemente ein Winkel ungleich 90% gegenüber dem Schaft 16 vermittelt werden. Zudem kann, wie in Fig. 2 dargestellt, der Fuss 22 zweiteilig ausgeführt werden, wobei der obere Teil 22a, welcher die Befestigungsschiene 2 hält, gegenüber dem unteren Teil 22b, der auf dem Dach aufliegt, verkippt werden kann, so dass der Winkel der Befestigungsschiene 2 bzw. des Stufenprofils 5 der Lage des oberen Solarpanels angepasst werden kann. Hierzu kann beispielsweise eine Verbindung der Teile 22a, 22b über Langlöcher 32 vorgesehen sein, wie diese in Fig. 2 angedeutet ist.

Auch wenn in den vorangehenden Ausführungsbeispielen die Erfindung in einer Anwendung für photoelektrische Solarmodule gezeigt worden ist, so kann sie ebenso zur Montage solarthermischer Kollektoren verwendet werden.

## Patentansprüche

1. Dachaufbau mit einer Anordnung von Solarpanelen (1, 1a, 1b), insbesondere photoelektrischer Solarmodule oder solarthermischer Kollektoren, in ziegeldichter Verlegung, wobei jedes Solarpanel (1, 1a, 1b) in einem metallischen Rahmen (3) gefasst ist, **dadurch gekennzeichnet, dass** zwischen in Frist-Traufen-Richtung nebeneinander liegenden Solarpanelen (1a, 1b) jeweils ein Befestigungsprofil (2) angeordnet ist, wobei das Befestigungsprofil (2) sich unter den Rahmen (3) des jeweils oberen Solarmoduls (1a) und über den Rahmen (3) des jeweils unteren Solarmoduls (1b) erstreckt, wobei das obere und das untere Solarmodul (1a, 1b) am Befestigungsprofil (2) befestigt sind.

2. Dachaufbau nach Anspruch 1, wobei das Befestigungsprofil (2) von unten am Rahmen (3) des oberen Solarmoduls (1a) befestigt ist.

3. Dachaufbau nach einem der vorangehenden Ansprüche, wobei an der Unterseite des Rahmens (3) des oberen Solarmoduls (1a) mindestens ein Anker (5) befestigt, insbesondere angeschraubt oder vernietet, ist, der in das Befestigungsprofil (2) eingehängt ist.

4. Dachaufbau nach Anspruch 3, wobei der Anker (5) in eine horizontal verlaufende, firstseitig offene Nut (7) des Befestigungsprofils (2) eingreift.

5. Dachaufbau nach Anspruch 4, wobei die Nut (7) in eine Vertiefung (8) an der Oberseite des Befestigungsprofils (2) mündet.

6. Dachaufbau nach einem der Ansprüche 3 bis 5, wobei der Anker (5) ein Stufenprofil mit einem oberen und einem unteren flachen Abschnitt (5a, 5b) ist, wobei die Abschnitte über eine Stufe (5c) verbunden sind, wobei der obere Abschnitt von unten am Rahmen (3) des oberen Solarmoduls (1a) gehalten ist, insbesondere von einer Schraube (6) oder Niete, und der untere Abschnitt in das Befestigungsprofil (2) eingreift.

7. Dachaufbau nach einem der Ansprüche 3 bis 6, wobei pro Solarmodul mindestens ein separater Anker (5) vorgesehen ist, und insbesondere wobei pro Solarmodul mindestens zwei separate Anker (5) vorgesehen sind.

8. Dachaufbau nach einem der vorangehenden Ansprüche, wobei das Befestigungsprofil (2) über ein elastisches Andruckelement (10) von oben auf dem unteren Solarmodul (1b) aufliegt.

9. Dachaufbau nach einem der vorangehenden Ansprüche, wobei ein firstseitiges Ende des unteren Solarmoduls (1b) von mindestens einer Haltevorrichtung (12) umgriffen ist, wobei die Haltevorrichtung mindestens teilweise vom Befestigungsprofil (2) gebildet ist.

10. Dachaufbau nach Anspruch 9, wobei die Haltevorrichtung (12) einen unteren Schenkel (15) aufweist, welcher das untere Solarmodul (1b) von unten stützt.

11. Dachaufbau nach Anspruch 10, wobei der untere Schenkel (15) von einem Auflageprofil (14) gebildet ist, welches vom Befestigungsprofil (2) gehalten ist.

12. Dachaufbau nach Anspruch 11, wobei das Auflageprofil (14) in mehreren Positionen am Befestigungsprofil (2) befestigbar ist, um Solarpanele unterschiedlicher Dicke aufzunehmen.

13. Dachaufbau nach Anspruch 12, wobei ein Schaft (16) des Auflageprofils (14) in eine Ausnehmung (17) im Befestigungsprofil (2) eingreift und über mindestens eine gezahnte Oberfläche (18a, 18b, 19a, 19b) verankert ist, und insbesondere wobei auf einer Seite gegenüber einer der gezahnten Oberflächen zwischen dem Schaft (16) und dem Befestigungsprofil (2) ein elastisches Spannelement (20) angeordnet ist.

14. Dachaufbau nach einem der Ansprüche 11 bis 13, wobei das Auflageprofil (14) mit einem elastischen Halteglied (29) gegen das Befestigungsprofil (2) gezogen ist, und insbesondere wobei das Halteglied (29) am unteren Schenkel (15) angreift und auf diesen eine im wesentlichen firstseitig gerichtete Kraft ausübt.

15. Dachaufbau nach einem der vorangehenden Ansprüche, wobei am Befestigungsprofil (2) ein Fuss (22) zur Befestigung an einem Dach oder Unterdach angeordnet ist.

16. Dachaufbau nach einem der vorangehenden Ansprüche, wobei sich das obere und das untere Solarmodul (1a, 1b) nicht überlappen und dass ein dabei entstehender Spalt zwischen den Solarpanelen (1) vom Befestigungsprofil (2) abgedeckt ist.
